# EUROPÄISCHE PATENTANMELDUNG

(11) **EP 4 254 100 A1**
(43) Veröffentlichungstag der Anmeldung: **04.10.2023**
(21) Anmeldenummer: 22166087.1
(22) Anmeldetag: 31.03.2022
(51) Int. Cl.: G05B 19/418, G05B 19/408

(54) **VERFAHREN ZUR ÜBERWACHUNG EINES PRODUKTIONSPROZESSES, COMPUTERPROGRAMM UND DATENTRÄGER**

(71) Anmelder: Siemens Aktiengesellschaft, 80333 München (DE)
(72) Erfinder: Hauser, Tobias, 89347 Bubesheim (DE); Pantano, Matteo, 81737 München (DE); Regulin, Daniel, 81825 München (DE); Schuh, Carsten, 85598 Baldham (DE); Soller, Thomas, 94469 Deggendorf (DE)
(74) Vertreter: Siemens Patent Attorneys

(57) **Zusammenfassung**

Die Erfindung betrifft ein Verfahren, ein Computerprogramm und einen Datenträger zur Überwachung eines Produktionsprozesses mit Produktionsschritten, die jeweils durch einen Werker (10) und/oder eine Fertigungseinrichtung (12) durchgeführt werden.

## Beschreibung

Die Erfindung betrifft ein Verfahren zur Überwachung eines mehrere Produktionsschritte umfassenden Produktionsprozesses gemäß dem Patentanspruch 1. Ferner betrifft die Erfindung ein Computerprogramm gemäß dem Patentanspruch 11. Schließlich betrifft die Erfindung einen Datenträger gemäß dem Patentanspruch 12.

Die Digitalisierung industrieller Produktionsumgebungen und somit von Produktionsprozessen schreitet unaufhaltsam voran. Bei der Digitalisierung kann es hilfreich sein, auf Daten zurückgreifen zu können, welche möglichst viele Parameter des jeweiligen Produktionsprozesses umfassen. Auch in digitalisierten Produktionsprozessen beziehungsweise Produktionsumgebungen kommen Personen beziehungsweise Werkern nach wie vor wichtige Aufgaben, beispielsweise die Steuerung komplexer Maschinen, zu. Dabei ist es schwierig, aus menschlichen Handlungen der Personen beziehungsweise der Werker konsistente Daten zu generieren, um diese vorteilhaft weiterzuverarbeiten beziehungsweise nutzen zu können. Dabei werden die Herausforderungen zum Generieren der Daten noch komplexer, sobald die menschlichen Daten mit maschinellen Daten, beispielsweise einer Fertigungseinrichtung, zusammengeführt werden sollen.

Heutzutage erfolgt die Datenerfassung von Personen beziehungsweise Werkern hauptsächlich mittels Mensch-Maschine-Schnittstellen (Engl.: Human Machine Interfaces, kurz HMI), die speziell für die Anwendung und den Anwendungsfall entwickelt wurden. Dabei ist die Menge an gewinnbaren Informationen sowie Benutzertypen beschränkt und kann nicht ohne weiteres erweitert werden.

Möglich wäre Mensch-Maschine-Schnittstellen zu entwerfen, welche an Benutzerprofile anpassbar sind. Entsprechende Ansätze wurden beispielsweise durch das Horizon 2020 Förderprogramm der Europäischen Union unterstützt. Ein Nachteil dabei ist, dass notwendige fortschrittliche Schnittstellen nur mit einem tiefen Verständnis des menschlichen Individuums implementierbar sind. Ferner können, je nach Datenquelle, auch entsprechende Vorschriften, wie beispielsweise die Allgemeine Datenschutzverordnung, beachtet werden müssen.

Des Weiteren besteht eine Schwierigkeit darin, gesammelte Daten für weitere Produktionsprozesse oder zur Überwachung des jeweiligen Produktionsprozesses besonders aufzubereiten und darüber hinaus zur Adaption auf weitere Anwendungen zu übertragen.

Aufgabe der vorliegenden Erfindung ist es, ein Verfahren, ein Computerprogramm sowie einen Datenträger zur Überwachung eines mehrere Produktionsschritte umfassenden Produktionsprozesses bereitzustellen, bei welchen eine besonders vorteilhafte Erfassung eines Werkers und/oder einer Fertigungseinrichtung ermöglicht wird und eine besonders effiziente Aufbereitung von den dadurch erfassten Daten ermöglicht wird.

Diese Aufgabe wird erfindungsgemäß durch die Gegenstände der unabhängigen Patentansprüche gelöst. Vorteilhafte Ausgestaltungen und Weiterbildungen der Erfindung sind in den abhängigen Patentansprüchen sowie in der Beschreibung und in der Zeichnung angegeben.

Ein erster Aspekt der Erfindung betrifft ein Verfahren. Das erfindungsgemäße Verfahren zur Überwachung eines mehrere Produktionsschritte umfassenden Produktionsprozesses, bei welchem die Produktionsschritte jeweils durch einen Werker und/oder eine Fertigungseinrichtung durchgeführt werden, umfasst mehrere Schritte.

In einem ersten Schritt erfolgt ein Erfassen wenigstens eines einen Zustand des Werkers und/oder der Fertigungseinrichtung charakterisierenden Parameters durch eine Erfassungseinrichtung für den jeweiligen Produktionsschritt der mehreren Produktionsschritte. In einem zweiten Schritt erfolgt ein Ablegen der erfassten Parameter in einem Speicher einer elektronischen Recheneinrichtung. In einem dritten Schritt erfolgt ein Erzeugen eines wenigstens zwei Teildatensätze umfassenden Datensatzes aus den abgelegten Parametern durch die elektronische Recheneinrichtung. In einem vierten Schritt erfolgt ein Zuordnen des jeweiligen Parameters in Abhängigkeit des von ihm charakterisierten Zustands zu einem der Teildatensätze. In einem fünften Schritt erfolgt ein Bereitstellen des die Teildatensätze umfassen Datensatzes, wobei dem jeweiligen Teildantesatz ein Abfragewert zugeordnet wird.

Der Produktionsprozess ist aufgrund mehrerer Produktionsprozesse beispielsweise ein mehrstufiger Produktionsprozess, wobei während des Produktionsprozesses zumindest teilweise ein Produkt beziehungsweise ein Objekt hergestellt wird. Bei der Fertigungseinrichtung kann es sich in Abhängigkeit des zu erzeugenden Produkts beziehungsweise Erzeugnisses beispielsweise um eine CNC-Fräse, einen 3D-Drucker, eine Drehbank und so weiter handeln. Der Werker ist insbesondere eine Person, welche beispielsweise in dem Produktionsprozess die Fertigungseinrichtung bedient und/oder beispielsweise das zu fertigende Objekt zwischen zwei Fertigungseinrichtungen bewegt. Dabei sind beliebige Kombinationen einzelner Produktionsschritte mit einer beliebigen Anzahl an Fertigungseinrichtungen und Werkern möglich.

In dem ersten Schritt erfolgt das Erfassen des wenigstens einen Zustands durch die Erfassungseinrichtung, welche insbesondere wenigstens einen entsprechenden Sensor, welcher dazu ausgebildet ist, den entsprechenden Zustand zu erfassen, aufweist. Beispielsweise ist die Erfassungseinrichtung als eine Wahrnehmungsschicht (Engl.: perception layer) eines Netzwerks von miteinander kommunizierenden Geräten ausgebildet. Diese miteinander kommunizierenden Geräte bilden insbesondere ein so genanntes Internet of Things (Internet der Dinge, kurz IOT), vorteilhafterweise ein industrielles Internet der Dinge (Engl.: Industrial Internet of things, kurz IIOT).

So kann die Erfassungseinrichtung mehrere Geräte umfassen, welche beispielsweise jeweils einen entsprechenden Sensor zum Erfassen des Zustands aufweisen. Dabei können die Geräte Daten beziehungsweise empfangene Sensorsignale, welche den Zustand in Form eines entsprechenden Parameters beziehungsweise Parameterwerts repräsentieren, austauschen. Dabei kann beispielsweise wenigstens ein Sensor der Erfassungseinrichtung als ein Drucksensor, als ein eine Kamera umfassendes Motion-Capturing-Systeme, als ein Kraftmesssensor, als ein Stimmenrekorder, als ein Thermometer und/oder als ein Sensor der Fertigungsmaschine, welche einen Fertigungsparameter der Fertigungsmaschine erfassen kann, ausgebildet sein.

In dem zweiten Schritt erfolgt ein Ablegen der erfassten Parameter, also jeweils zumindest des jeweils einen Parameter für den jeweiligen Produktionsschritt, in dem Speicher der elektronischen Recheneinrichtung, wobei die Recheneinrichtung vorzugsweise separat zu der Erfassungseinrichtung ausgebildet ist. So werden vorzugweise Kommunikationsmittel, beispielsweise Modems und/oder Funkmodule vorgehalten, welche einen Datenaustausch und somit ein Übermitteln der Parameter zwischen Erfassungseinrichtung und der elektronischen Recheneinrichtung ermöglichen.

Beim Erzeugen des Datensatzes mit den wenigstens zwei Teildatensätzen kommt vorzugsweise ein Algorithmus, welcher beispielsweise auf einem Prozessor der elektronischen Recheneinrichtung ausgeführt wird, zum Einsatz. Dabei kann dieser Algorithmus beispielsweise eine erste Charakterisierung vornehmen, welche das Zuordnen des jeweiligen Parameters in Abhängigkeit des von ihm charakterisierten Zustands zu einem jeweiligen Teildatensatz ermöglicht. Ist der erfasste Zustand beispielsweise ein Zustand, welcher eine eindeutige Charakterisierung beziehungsweise Identifizierung des Werkers ermöglicht, weil beispielsweise dessen Größe zusammen mit seinem Gewicht erfasst wurde, kommt der entsprechende Parameter zu einem ersten der Teildatensätze. Handelt es sich hingegen bei dem erfassten Parameter beispielsweise um den Vorschub einer CNC-Fräse während des Fräsens, kann das Zuordnen in einem zweiten der Teildatensätze erfolgen. So können durch das Zuordnen, beispielsweise die Parameter, welche einem Datenschutz unterliegen, von Parametern, welche dies nicht tun, getrennt werden. Beispielsweise können auch die Parameter entsprechend zwischen Werker und Fertigungseinrichtung oder zwischen mehreren Fertigungseinrichtungen getrennt werden.

Im fünften Schritt wird der Datensatz bereitgestellt, sodass dieser beispielsweise von einem Benutzer der elektronischen Recheneinrichtung abrufbar ist. Zusätzlich oder alternativ kann beispielsweise ebenfalls über ein Kommunikationsmodul der Datensatz an eine weitere elektronische Recheneinrichtung oder an einen Netzwerkverbund, beispielsweise mittels IP-Protokoll über das Internet, bereitgestellt werden. Bei dem Bereitstellen wird dem jeweiligen Teildatensatz ein Abfragewert zugeordnet, welcher beispielsweise dergestalt ausgebildet sein kann, dass durch den Abfragewert bei dem Bereitstellen eine Zugangskontrolle gewährleistet werden kann, sodass beispielsweise bestimmte Nutzergruppen nicht auf den vollständigen Datensatz, sondern jeweils nur auf einen bestimmten Teildatensatz zugreifen können.

Der Datensatz kann insbesondere durch entsprechende Algorithmen der elektronischen Recheneinrichtung als Graph beziehungsweise Wissensgraph hinterlegt sein. Dabei kann beispielsweise jeder der Teildatensätze einen eigenen Graphen darstellen. Beim Bereitstellen des Datensatzes beziehungsweise der Teildatensätze können die Daten somit besonders gut durchsuchbar und/oder anordenbar bereitgestellt werden, sodass der Datensatz einen virtuellen Experten ermöglicht.

Mit anderen Worten dient das erfindungsgemäße Verfahren insbesondere zum Erzeugen konsistenter Daten aus menschlichen Handlungen in industrieller Produktionsumgebung. Ferner dient das Verfahren zur Nutzung dieser Daten beispielsweise in Form eines Steuerungsagenten und/oder eines virtuellen Experten, welcher zur Erleichterung des Wissenstransfers verwendet werden kann, sodass aufgrund der Überwachung beispielsweise ein analoger Produktionsprozess in einer anderen Produktionsumgebung aufgenommen werden kann.

Dabei wird das Verfahren insbesondere durch fünf Bausteine zusammengefasst. Das wäre der Werker als erweiterter Betreiber (Engl.: Augmented Operator) des Produktionsprozesses. So kann der Werker durch entsprechende Sensoren beziehungsweise Technologien, wie beispielsweise eine VR-Brille (Engl.: Virtual Reality Headset), durch welche der Werker eine simulierter Umgebung bearbeiten kann und/oder durch eine Datenbrille und/oder durch Bewegungserfassung, Kraftmessung und/oder Sprachaufzeichnung ein insbesondere während des Produktionsprozesses kontinuierliches Erfassen der Parameter und somit kontinuierliche Wissensdaten generieren. Ein zweites der Bausteine ist die insbesondere als Wahrnehmungssicht (Engl.: perception layer) ausgebildete Erfassungseinrichtung, welche insbesondere für die Verknüpfung des Datensatzes mit den Parametern - beziehungsweise Datenquellen, also beispielsweise den Sensoren der Erfassungseinrichtung - zuständig ist. Ein dritter Baustein ist eine entsprechende Wissensdarstellung, welche aufgrund des Ablegens, Erzeugens und Zuordnens der Parameter, sodass daraus ableitbare Informationen über den Produktionsprozess beispielsweise in Form des Graphen als der Datensatz bereitgestellt werden können. Als vierter Baustein kann das Bereitstellen des Datensatzes im fünften Schritt des erfindungsgemäßen Verfahrens beziehungsweise der dadurch ermöglichte Datenaustausch des Datensatzes betrachtet werden. Dabei soll beispielsweise mittels Cloud beziehungsweise entfernten elektronischen Recheneinrichtungen eine Plattform für den Austausch von Wissensdaten zwischen verschiedenen Recheneinrichtungen geschaffen werden. Dabei können die verschiedenen Recheneinrichtungen beispielsweise jeweils auch unterschiedlichen Unternehmen und/oder Produktionsstätten zugeordnet sein. Vorteilhafterweise werden die Daten dergestalt bereitgestellt, dass diese besonders gut aufbereitet sind, da beispielsweise eine innere Datenstruktur des Datensatzes dafür vorteilhaft ist, wie durch den Graphen realisierbar. So kann als fünfter Baustein des erfindungsgemäßen Verfahrens bei dem Bereitstellen des Datensatzes ein virtueller Experte vorgehalten werden. Dadurch können beispielsweise Entitäten, die beispielsweise vermarktungsfähige, maschinenbezogene Wissensdaten benötigen und/oder besitzen auf eine globale Instanz zum Informationsaustausch zurückgreifen.

Ein Vorteil des Verfahrens ist, dass dadurch eine insbesondere kontinuierliche Erfassung von Zuständen des Werkers und/oder der Fertigungsmaschine während des Produktionsprozess, besonders vorteilhaft Daten für den Werker erfassbar sind, sodass für diesen gut elektronisch verarbeitbar sind. Dies kann insbesondere durch geschickte Bestückung der Erfassungseinrichtung mit entsprechenden Sensoren erfolgen. Ein zweiter Vorteil des Verfahrens ist, dass durch das Bilden mehrere Teildatensätze aus dem Datensatz auf besonders vorteilhafte Weise spezielles Wissen an berechtigte Empfänger transferiert werden kann. Somit kann durch das erfindungsgemäße Verfahren auf vorteilhafte Weise der Produktionsprozess überwacht werden. Darüber hinaus kann aufgrund der bei dem Verfahren zur Überwachung gewonnen Daten ein alternativer Produktionsprozess initiiert beziehungsweise überwacht werden, welcher sich insbesondere von dem zuerst überwachten Produktionsprozess dadurch unterscheidet, dass dieser beispielsweise an einer anderen Produktionsstätte durchgeführt wird. Somit ist ein weiterer Vorteil des erfindungsgemäßen Verfahrens ein besonders einfacher beziehungsweise umfassender Wissensaustausch über den Produktionsprozess selbst. Ferner ist die Optimierung beziehungsweise zumindest Verbesserung des Produktionsprozesses auf Basis des erlangten Wissens ein weiterer Vorteil des Verfahrens.

In vorteilhafter Ausgestaltung der Erfindung wird wenigstens einer der Teildatensätze und/oder der Datensatz als Graph erzeugt, indem beim Ablegen des jeweiligen Parameters in den Speicher eine Einordnung des jeweiligen Parameters als ein Knoten oder eine Kante des Graphen erfolgt. Die Einordnung erfolgt vorzugsweise beispielsweise mittels eines selbstlernenden Algorithmus. Mit anderen Worten werden die Daten mittels einer insbesondere abstrakten Struktur als Datensatz in den Datenspeicher abgelegt, wobei die Parameter in ihrer Beziehung zueinander beziehungsweise die Zustände zueinander strukturiert werden. Handelt es sich beispielsweise bei einem erfassten Zustand um eine Handbewegung des Werkers, mit welcher er einen Vorschub beispielsweise einer als CNC-Fräse ausgebildeten Fertigungsmaschine erzeugt, wird als weiterer Zustand beziehungsweise Parameter der eingestellte Vorschub erfasst. Diese beiden Parameter können als Ecken des Graphen erfasst und beispielsweise über eine Kante verknüpft werden. So wird auf besonders vorteilhafte Weise eine strukturiere Wissensdarstellung durch den Graphen beziehungsweise Wissensgraph ermöglicht, sodass dieser als Informationsrückgrat des Verfahrens dienen kann. Durch den Graph kann beispielsweise eine standardisierte Darstellung des Wissens in einem Unternehmen erfolgen, welches je nach Anwendungsfall abgefragt oder verändert werden kann. Vorteilhafterweise kann so ein Graph mit Daten aus verschiedenen Quellen beispielsweise durch weitere Sensoren und/oder Eigenschaften des zu fertigenden Objekts befüllt werden, sodass beispielsweise auf besonders vorteilhafte Weise durch das Verfahren eine Normalisierung beziehungsweise Normierung der Wahrnehmungsschicht und somit der Erfassungseinrichtung ermöglicht werden kann. Dadurch können beispielsweise Zustände unterschiedliche Werker objektiv erfasst werden.

In weiterer vorteilhafter Ausgestaltung der Erfindung beschreibt der wenigstens eine erfasste Zustand eine Bewegung des Werkers und/oder eine Einstellung, insbesondere in Form eines Betriebsparameters, wie beispielsweise einem Vorschub, der Fertigungseinrichtung. Mit anderen Worten wird mittels der Erfassungseinrichtung eine Bewegung der Person, welche beispielsweise die Fertigungseinrichtung bedient, und/oder eine Einstellung der Fertigungseinrichtung erfasst. Beispielsweise kann eine Bewegung erfasst werden, welche der Werker verwendet, um die Einstellung der Fertigungseinrichtung zu verändern, sodass die Bewegung beispielsweise eine Armbewegung ist. Die Einstellung der Fertigungseinrichtung beschreibt beispielsweise einen Betriebsparameter, wie den genannten Vorschub. Dadurch ergibt sich der Vorteil, dass auf besonders vorteilhafte Weise eine Überwachung des Produktionsprozesses erfolgen kann.

In weiterer vorteilhafter Ausgestaltung der Erfindung wird zusätzlich wenigstens ein Umgebungsparameter für den Produktionsprozess und insbesondere für wenigstens einen der Produktionsschritte erfasst. Der Umgebungsparameter kann insbesondere eine Temperatur, einen Luftdruck, eine Feuchtigkeit und/oder beispielsweise eine Stimme des Werkers sein. Mit anderen Worten wird zusätzlich zu dem Parameter, welcher beispielsweise einen direkten Zustand des Produktionsprozesses beschreibt ein Umgebungsparameter ermittelt, welcher beispielsweise nicht durch den Produktionsprozess selbst vorgebbar ist oder zumindest auf den ersten Blick nicht direkt mit diesem zusammenhängt. Beispielsweise kann sich die Fertigungseinrichtung in einer Halle befinden und der wenigstens eine Umgebungsparameter wird die Hallentemperatur und/oder eine Luftfeuchtigkeit der Halle bestimmt. Beispielsweise kann bei hoher Hallentemperatur aufgrund einer Überhitzungsgefahr eine Fertigungsmaschine nur mit einer geringeren Geschwindigkeit beispielsweise eines Vorschubs gefahren werden. Dies kann der Werker aufgrund seiner Erfahrung beispielsweise unbewusst beachten. Dabei kann der Umgebungsparameter vorteilhafterweise durch die Erfassungseinrichtung und somit die Wahrnehmungsschicht erfasst werden. Dafür können entsprechende Sensoren durch die Erfassungseinrichtung vorgehalten werden, beispielsweise ein Thermometer und/oder ein Luftdrucksensor, wie ein Barometer. Durch das Verfahren wird es nun ermöglicht, dass solche Zusammenhänge aus dem Produktionsprozess erfasst werden. Dadurch ergibt sich der Vorteil, dass eine Überwachung des Produktionsprozesses besonders vorteilhaft erfolgen kann.

In vorteilhafter Ausgestaltung der Erfindung wird durch die Erfassungseinrichtung der Zustand des Werkers mittels einer VR-Brille und/oder einer Datenbrille, eine Verfolgungseinrichtung (Engl.: Tracking, beispielsweise auch des VR-Helms), einer Bewegungserfassungseinrichtung (Engl.: Motion Capturing System), eines Kraftmessungssensors und/oder Stimmenaufzeichnungseinrichtung. So kann beispielsweise das Motion Capturing System, beispielsweise eine stereoskopische Bewegungsmessung durch an dem Werker beziehungsweise seiner Kleidung angebrachte Marker in Verbindung mit Tiefeninformationen erfassenden Kameras realisiert werden. Mittels dem Kraftmessungssensor kann beispielsweise an einem Bedienelement der Fertigungseinrichtung durch den Werker wirkende Kraft erfasst werden, wodurch erfasst werden kann, wie der Werker die Fertigungseinrichtung bedient. Die Datenbrille kann Informationen zum Sichtfeld des Werkers hinzufügen. Sie ermöglicht dadurch ein erweiterte Realität (Engl.: augmented Reality) und/oder eine gemischte Realität (Engl.: mixed Reality). Mit anderen Worten werden Sensoren und/oder Vorrichtungen verwendet, welche besonders geeignet sind, menschliche Handlungen, insbesondere in Form von Bewegung und/oder Sprache, zu erfassen. Dadurch ergibt sich der Vorteil, dass auf besonders vorteilhafte Weise beispielsweise eine Gestik und/oder Mimik des Werkers erfasst werden kann. Dadurch kann auf besonders vorteilhafte Weise der Datensatz gebildet werden.

In weiterer vorteilhafter Ausgestaltung der Erfindung erfolgt das Bereitstellen des die Teildatensätze umfassen Datensatzes an ein Kommunikationsnetz und/oder an ein von der elektronischen Recheneinrichtung unterschiedlichen, weiteren elektronischen Recheneinrichtung. Mit anderen Worten werden die Teildatensätze beziehungsweise der Datensatz nicht nur in dem Speicher der elektronischen Recheneinrichtung vorgehalten, sondern zumindest ein Zugriff auf diesen Speicher wird über das Kommunikationsnetz ermöglicht. Zusätzlich oder alternativ wird wenigstens eine Kopie des Speichers in einer von der Recheneinrichtung unterschiedlichen elektronischen Recheneinrichtung vorgehalten. So kann beispielsweise der Zugriff auf den Datensatz beziehungsweise den Graphen beispielsweise über das Internet erfolgen. Der Datensatz kann beispielsweise über einen Clouddienst vorgehalten werden. Dadurch ergibt sich der Vorteil, dass das Verfahren besonders flexibel eingesetzt werden kann.

In weiterer vorteilhafter Ausgestaltung der Erfindung wird anhand des Abfragewerts eine Zugangsbeschränkung für den jeweiligen Teildatensatz erstellt. Mit anderen Worten ermöglicht der Abfragewert einen Zugriff auf den jeweiligen Teildatensatz beispielsweise nur nach Passworteingabe und/oder Authentifizierung, beispielsweise mittels eines Tokens, welcher beispielsweise in Form eines USB-Sticks an einen Rechner eingesteckt werden muss. Dadurch ergibt sich der Vorteil, dass beispielsweise nur der Werker auf einen Teildatensatz, welcher persönliche Daten von ihm enthält, zugreifen kann. Wohingegen beispielsweise auf die öffentlichen Daten uneingeschränkt zugegriffen werden kann. So ist ein weiterer Vorteil, dass das Verfahren besonders datenschutzkonform eingesetzt werden kann. Darüber hinaus kann dem jeweiligen Werker eine für ihn relevante Information zugespielt werden. Zusätzlich oder alternativ können so auch beispielsweise Betriebsgeheimnisse vor einer Weitergabe an andere Unternehmen bewahrt werden, wenn beispielsweise zwischen beiden Unternehmen eine Kooperation in manchen Teildaten besteht.

In weiterer vorteilhafter Ausgestaltung der Erfindung umfasst wenigstens einer der Teildatensätze Parameter umfasst, welche eine Identifikation des Werkers ermöglichen. Dies können beispielsweise Vitaldaten des Werkers sein, wodurch beispielsweise bei Auffälligkeiten in den Daten der Werker vor Gesundheitlichen Problem gewarnt werden kann. Dadurch ergibt sich der Vorteil, dass das Verfahren einer Arbeitssicherheit dient.

In weiterer vorteilhafter Ausgestaltung der Erfindung erfolgt das Durchführen wenigstens einer der Verfahrensschritte mittels Methoden des maschinellen Lernens. Mit anderen Worten wird beispielsweise zum Erfassen der Bewegung und somit beim Auslesen der Sensordaten zum Ermitteln des Parameters aus dem Zustand auf maschinelles Sehen (Engl.: Computer vision) zurückgegriffen. Dabei wird die Computer Vision mittels Methoden des maschinellen Lernens durchgeführt wird. Darüber hinaus kann beispielsweise zur Kategorisierung beziehungsweise Zuordnung der jeweiligen Parameter zu den Teildatensätzen beziehungsweise beim Bestimmen der Knoten und Kanten des Graphs auf bestärkendes Lernen (Engl.: reinforced learning) oder dergleichen zurückgegriffen werden. So kann beispielsweise ein Werker bestimmte Daten markieren und somit beispielsweise ein Modell, welches durch das maschinelle Lernen beispielsweise für den Graphen erstellt wird, zu verbessern. Dadurch ergibt sich der Vorteil, dass das Verfahren besonders flexibel eingesetzt werden kann. Darüber hinaus kann das Verfahren für eine besonders große Menge von Zuständen verwendet werden beziehungsweise diese erfassen. Ein weiterer Vorteil ist, dass das Verfahren somit schnell an Produktionsprozesse anpassbar ist.

In weiterer vorteilhafter Ausgestaltung der Erfindung wird zum Steuern eines weiteren Produktionsprozesses aufgrund des Datensatzes ein Steuerungsagent bereitgestellt. Mit anderen Worten wird ein virtueller Werker beziehungsweise ein virtueller Bot erzeugt, welcher beispielsweise als ein Avatar ausgebildet wird. Dieser kann beispielsweise wie ein Sprachassistent bedienbar sein, beziehungsweise kann mittels Sprache mit ihm interagiert werden. Dabei verfügt er über technische Mittel beispielsweise in Form von Kommunikationsschnittstellen, um beispielsweise auf die Fertigungseinrichtung Einfluss zu nehmen. So kann der Steuerungsagent beispielsweise einen Produktionsschritt des Produktionsprozesses oder einen alternativen Produktionsschritt eines alternativen Produktionsprozesses, beispielsweise in einer anderen Produktionsstätte, ermöglichen. Dadurch ergibt sich der Vorteil, dass das Verfahren besonders vorteilhaft beispielsweise zum Skalieren des Produktionsprozesses verwendet werden kann. Darüber hinaus kann der Steuerungsagent beispielsweise besonders vorteilhaft zum Trainieren verwendet werden, sodass beispielsweise neue bisher dem Produktionsprozess nicht vertraute Werker besonders schnell eingelernt werden können. Dadurch ergibt sich der Vorteil, dass der Produktionsprozess besonders vorteilhaft überwacht und zudem gesteuert werden kann.

Ein zweiter Aspekt der Erfindung umfasst ein Computerprogramm. Das Computerprogramm kann beispielsweise in einem Speicher der elektronischen Recheneinrichtung einer Presse geladen werden und umfasst Programmmittel, um die Schritte des Verfahrens auszuführen, wenn das Computerprogramm in der elektronischen Recheneinrichtung beziehungsweise einer Steuerungseinrichtung ausgeführt wird.

Dabei sind Vorteile und vorteilhafte Ausgestaltungen des ersten Aspekts der Erfindung als Vorteile und vorteilhafte Ausgestaltungen des zweiten Aspekts der Erfindung anzusehen und umgekehrt.

Ein dritter Aspekt der Erfindung betrifft einen elektronisch lesbaren Datenträger. Der elektronisch lesbare Datenträger umfasst darauf gespeicherte elektronisch lesbare Steuerinformationen, die zumindest ein Computerprogramm wie soeben vorgestellt umfassen und derart ausgestaltet sind, dass sie bei der Verwendung des Datenträgers in einer elektronischen Recheneinrichtung ein hier vorgestelltes Verfahren gemäß dem ersten Aspekt der Erfindung ausführen können.

Dabei sind Vorteile und vorteilhafte Ausgestaltungen des dritten Aspekts der Erfindung als Vorteile und vorteilhafte Ausgestaltungen sowohl des zweiten als auch des ersten Aspekts der Erfindung anzusehen und jeweils umgekehrt.

Für all diejenigen Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Es zeigt:
- FIG 1: ein schematisches Ablaufdiagramm eines Verfahrens zur Überwachung eines Produktionsprozesses; und
- FIG 2: ein schematisches Diagramm des Verfahrens.

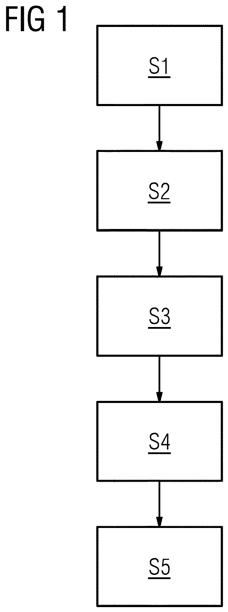

Fig. 1 zeigt in einem schematischen Ablaufdiagramm ein Verfahren zur Überwachung eines mehrere Produktionsschritte umfassenden Produktionsprozesses. Der Produktionsprozess kann beispielsweise das Produzieren eines Produkts, beispielsweise ein Taschenrechner, sein. Die Produktionsschritte werden jeweils durch einen Werker 10 und/oder eine Fertigungseinrichtung 12 durchgeführt. Dabei dient die Überwachung dem Zweck, dass der Produktionsprozess beispielswiese an anderen Produktionsstandorten als dem durch das Verfahren überwachten beispielsweise besonders gut adaptiert werden kann. Darüber hinaus soll Knowhow des Werkers 10 besonders vorteilhaft erfasst und darüber hinaus standardisierbar sein.

Das Verfahren umfasst dabei mehrere Schritte: In einem ersten Schritt S1 erfolgt ein Erfassen wenigstens eines einen Zustand des Werkers 10 und/oder der Fertigungseinrichtung 12 charakterisierenden Parameters durch eine Erfassungseinrichtung 14, welche insbesondere als sogenannte Perception Layer ausgebildet ist, für einen jeweiligen Produktionsschritt der mehreren Produktionsschritte. In einem zweiten Schritt S2 erfolgt ein Ablegen der erfassten Parameter in einem Speicher 16 einer elektronischen Recheneinrichtung 18. In einem dritten Schritt S3 erfolgt ein Erzeugen eines wenigstens zwei Teildatensätze 20 umfassenden Datensatz 22 aus den abgelegten Parametern durch die elektronische Recheneinrichtung 18. In einem vierten Schritt S4 erfolgt ein zuordnen des jeweiligen Parameters in Abhängigkeit des von ihm charakterisierten Zustands zu einem der Teildatensätze 20. In einem fünften Schritt S5 erfolgt ein Bereitstellen des die Teildatensätze 20 umfassenden Datensatzes 22, wobei dem jeweiligen Teildatensatz 20 ein Abfragewert zugeordnet wird.

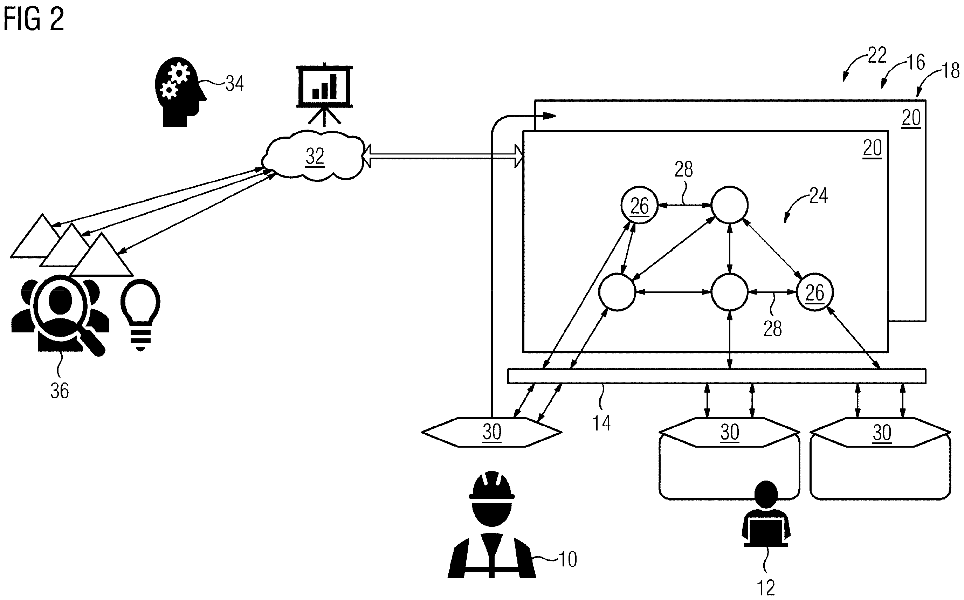

Fig. 2 zeigt ein schematisches Diagramm des Verfahrens und dabei verwendeter Vorrichtung und deren Zusammenspiel.

So wird bei dem Verfahren vorteilhafterweise der Datensatz 22 und/oder wenigstens einer der Teildatensätze 20 als Graph 24 erzeugt, indem beim Ablegen (Schritt S2) ein Einordnen des jeweiligen Parameters als ein Knoten 26 oder eine Kante 28 des Graphen 24 erfolgt. Dadurch kann der Datensatz 22 den jeweils wenigstens einen Zustand des jeweiligen Produktionsschritts besonders vorteilhaft bereitstellen, sodass der Datensatz 22 vorteilhaft für einen Wissenszugewinn und eine Beschreibung des Produktionsprozesses verwendet werden kann. Dabei wird vorteilhafterweise als der wenigstens eine Zustand eine Bewegung des Werkers 10 und/oder eine Einstellung, insbesondere in Form eines Betriebsparameters, der Fertigungseinrichtung 12 erfasst beziehungsweise entsprechende der jeweilige Zustand beschrieben. Damit der jeweilige Zustand besonders vorteilhaft erfasst werden kann, weist die Erfassungseinrichtung 14 beispielsweise mehrere Sensoren 30 auf, wobei beispielsweise die Erfassungseinrichtung 14 den Zustand des Werkers 10 mittels Bewegungserkennung beispielsweise über ein Virtual Reality Headset und/oder Kraftmesssensoren und/oder eine Stimmaufzeichnung erfassen kann.

Zusätzlich oder alternativ können die Sensoren 30 beziehungsweise der wenigstes eine Sensor 30 die Fertigungseinrichtung 12 erfassen, beispielsweise kann der Zustand ein Drehmoment für einen Fräskopf oder dergleichen darstellen. Das Bereitstellen des die Teildatensätze 20 umfassenden Datensatzes 22 kann an eine Kommunikationseinrichtung beziehungsweise ein Kommunikationsnetz und/oder an eine von der elektronischen Recheneinrichtung unterschiedlichen Recheneinrichtung 32 erfolgen, welche beispielsweise im gezeigten Ausgangsbeispiel als ein Server in einer Rechenwolke (Engl.: Cloud) ausgebildet ist.

Einer der Teildatensätze 20 kann beispielsweise einen privaten Datensatz des Werkers 10 darstellen und somit beispielsweise Parameter umfassen, welche eine eindeutige Identifikation des Werkers ermöglichen. Ferner kann der Abfragewert eine Zugangsbeschränkung für einen jeweiligen Teildatensatz 20 ermöglichen, sodass beispielsweise auf den privaten Datensatz nur der Werker 10 Zugriff hat, da der Teildatensatz 20 beispielsweise mittels des Abfragewerts passwortgeschützt ist.

Vorteilhafterweise werden bei dem Verfahren Methoden des maschinellen Lernens, insbesondere beim Erfassen der Zustände und beim Erstellen des Graphen verwendet. Somit kann durch die elektronische Recheneinrichtung 18, als auch die elektronische Recheneinrichtung 32, beispielsweise der Datensatz 22 beziehungsweise der wenigstens eine Graph 24 so aufbereitet werden, dass diese beispielsweise besonders vorteilhaft zum Erstellen eines Steuerungsagenten 34 verwendet werden können.

Dieser Steuerungsagent 34 kann zum Steuern eines weiteren Produktionsprozesses aufgrund des Datensatzes 22 bereitgestellt wird. Über die elektronische Recheneinrichtung 32 können weitere Benutzer 36, welche nicht im Produktionsprozess selbst involviert sind, Zugang auf das durch die Überwachung generierte Wissen, insbesondere anhand des Graphen 24, erhalten.

Der Produktionsprozess selbst wird vorteilhaftweise kontinuierlich überwacht, sodass durch die Erfassungseinrichtung 14 vorteilhafterweise während des Produktionsprozesses weitere Parameter, beispielsweise zusätzlich wenigstens ein Umgebungsparameter erfasst werden können. Der Umgebungsparameter kann insbesondere eine Temperatur, eine Luftfeuchtigkeit und/oder eine Stimme des Werkers 10 umfasst. Dieser wenigstens eine Umgebungsparameter kann aus Metadaten des Produktionsprozesses anfallen beziehungsweise gewonnen werden.

Dem Verfahren liegt dabei die Erkenntnis zugrunde, dass im Stand der Technik anstatt Daten über menschliche Handlungen, welche gespeichert werden sollen bisher nirgends vernünftig erfasst werden. Lediglich Beispiele aus dem Bereich der Robotik sind bekannt, in denen Prozessparameter des Roboters und nicht des Menschen vernünftig vorgehalten werden, wie beispielsweise in dem durch die Europäische Union geförderten Projekt Namens Robot Earth. Ferner gibt es einen Ansatz, bei dem ein Bediener beziehungsweise der Werker sein Wissen auf Algorithmen übertragen muss, welche dann die Maschine bedienen, wodurch die durch das vorgestellte Verfahren ermöglichte Automatisierung entfällt. Darüber hinaus sind bisher keine etablierten Methoden für den Prozess des Wissenstransfers bekannt. So gibt es zwar Grundlagen für die Übertragung von Informationen zwischen Einheiten beispielsweise zu Produktionsstandorten, welche beispielsweise unter dem Referenzarchitekturmodell Industrie 4.0 zusammengefasst sind. Ähnliche Untersuchen zeigt das IVRA NEXT (Industrial Value Chain Reference Architecture NEXT), wobei ein kooperativer Austausch von Wissensgenerierten Daten vorgeschlagen wird. Dabei beschränkt sich der Stand der Technik jedoch auf das Finden eines notwendigen gemeinsamen Wörterbuchs für gemeinsam genutzte Daten. Das Erfassen von Merkmalen eines Werkers 10 insbesondere im Zusammenspiel mit einer Fertigungseinrichtung 10 wird dabei nicht bedacht.

Ein besonders großer Vorteil des gezeigten Verfahrens ist die Verwendung wenigstens eines Wissensgraph beziehungsweise Graph 24, bei dem insbesondere eine mehrschichtige Struktur vorgehalten werden kann, die dazu beiträgt, insbesondere durch die Teildatensätze 20, zwischen abgelegten Parametern für öffentliche Zwecke und Parametern beziehungsweise Daten für private Zwecke zu unterscheiden. Eine solche Struktur hilft bei der Einhaltung von Datenschutzrichtlinien, wobei der Werker 10 insbesondere selbst eine Klassifikation treffen kann, welche Daten auf der öffentlichen Ebene verwendet werden können und welche geheim gehalten werden sollten.

Die Erfassungseinrichtung 14 ist die Schnittstelle zwischen den ihr zugeordneten beziehungsweise umfassenden Sensoren 30, welche zum Erfassen des Werkers 10 und/oder der Fertigungseinrichtung 12 dienen und der elektronischen Rechenrichtung 18. Dabei kann die insbesondere als Erfassungsschicht beziehungsweise Wahrnehmungsschicht ausgebildete Erfassungseinrichtung 14 ein Northbound Interface darstellen und somit als eigenständiger Teil die Kommunikation mit dem höher eingestuften Element, also der elektronischen Recheneinrichtung 18, dienen. Alternativ kann die Erfassungseinrichtung 14 als Southbound Interface ausgebildet sein und beispielsweise als Komponente der elektronischen Recheneinrichtung 18 mit den darunterliegenden Sensoren 30 kommunizieren.

Ist der Wissensgraph beziehungsweise Graph 24 für einen bestimmten Produktionsprozess, beispielsweise additive Fertigung, Montage eines Getriebes oder dergleichen mit den Parametern gefüllt, kann sein öffentliches Gegenstück beispielsweise eine Kopie in einem Speicher der elektronischen Recheneinrichtung 32 beispielsweise durch Gegenleistungen an Unternehmen weitergegeben werden. Wobei die Gegenleistung eine Finanztransaktion sein kann. Die bei der Weitergabe bereitgestellten Informationen kann das andere Unternehmen zur Verbesserung ihres Produktionsprozesses nutzen.

Darüber hinaus kann der Graph 24 auch durch weitere Daten beispielsweise an einer anderen Produktionsstätte mit dem vorgestellten Verfahren ergänzt werden, sodass ein verbesserter Graph 24 beispielsweise wieder in den Speicher der elektronischen Recheneinrichtung 32 geladen werden kann. Die Erfassungseinrichtung 14 kann beispielswiese insbesondere dazu verwendet werden, proprietäre Datenformate der entsprechenden Sensoren 30 in gängige Formate zu konvertieren, sodass der Graph 34 beispielsweise besonders allgemein gültig gehalten werden kann. Dazu können ferner durch die elektronische Recheneinrichtung 18 besonders unter Verwendung eines maschinellen Lernens, welches beispielsweise in einem neuronalen Netzbereich der elektronischen Recheneinrichtung 18 durchgeführt wird, semantische Beschreibungen ergänzt werden. Vorteilhafterweise ist bei einem selbstlernenden Ansatz beziehungsweise dem maschinellen Lernen ein kontinuierlicher Datenzugriff gegeben, sodass jederzeit während des Produktionsprozesses Daten durch die Erfassungseinrichtung 14 bereitgestellt werden.

Eine Anbindung der Fertigungseinrichtung 12 und/oder die Sensoranbindungen der Sensoren 30 an die Wahrnehmungsschicht beziehungsweise Erfassungseinrichtung 14 kann beispielsweise über IOT Devices, Edge Devices, OPC-Anbindungen hergestellt werden. So kann auf vorteilhafte Weise, das bei dem Verfahren gesammelte Wissen von Menschen und Maschinen genutzt werden, um notwendige Verbesserungen in einer digitalen Werkzeugkette zu erkennen, welche für die Entwicklung oder die Verbesserung von Produktion genutzt werden. Zusammenfassend lässt sich sagen, dass die Verknüpfung von menschlich generierten Wissen mit dem vorgehaltenen Datensatz 22 beispielsweise auch einem Service zugutekommt, indem Empfehlungen für Produktionsaufträge auf der Grundlage von Produktionserfahrungen aus Produktionsstätten, welche den Produktionsprozess durchführen, weitergegeben werden können.

Das vorgeschlagene Verfahren nutzt dabei verschiedene Technologien, z. B. die Verarbeitung natürlicher Sprache, mehrschichtige Wissensgraphen, Konnektivität durch Adapter und Edge-Geräte, menschenzentrierte Wissensdarstellung, maschinelles Lernen, cloudbasierten Informationsaustausch und virtuelle Avatare, um das System in die Fertigungsumgebung zu integrieren. Es wird eine erhebliche Produktivitätssteigerung durch effiziente Problemlösungsprozesse und sofortigen Informationszugriff erwartet. Darüber hinaus können Anbieter des Verfahrens profitieren, indem sie Best-Practice-Lösungen über die Cloud-Anbindung anbieten. Da viele Probleme in der Fertigung mit den eingesetzten Geräten und Maschinen zusammenhängen, können auch Systemanbieter durch die Bereitstellung leicht zugänglicher Informationen profitieren. Plattformanbieter können ferner eine Gebühr für Informationsanfragen erheben.

### Bezugszeichenliste

- S1: Erster Schritt
- S2: Zweiter Schritt
- S3: Dritter Schritt
- S4: Vierter Schritt
- S5: Fünfter Schritt
- 10: Werker
- 12: Fertigungseinrichtung
- 14: Erfassungseinrichtung
- 16: Speicher
- 18: Elektronische Recheneinrichtung
- 20: Teildatensatz
- 22: Datensatz
- 24: Graph
- 26: Knoten
- 28: Kante
- 30: Sensor
- 32: Weitere elektronische Recheneinrichtung
- 34: Steuerungsagent
- 36: Benutzer

## Patentansprüche

1. Verfahren zur Überwachung eines mehrere Produktionsschritte umfassenden Produktionsprozesses, wobei die Produktionsschritte jeweils durch einen Werker (10) und/oder eine Fertigungseinrichtung (12) durchgeführt werden, mit den Schritten:
- Erfassen wenigstens eines einen Zustand des Werkers (10) und/oder der Fertigungseinrichtung (12) charakterisierenden Parameters durch eine Erfassungseinrichtung (14) für den jeweiligen Produktionsschritt der mehreren Produktionsschritte;(S1)
- Ablegen der erfassten Parameter in einem Speicher (16) einer elektronischen Recheneinrichtung (18); (S2)
- Erzeugen eines wenigstens zwei Teildatensätze (20) umfassenden Datensatzes (22) aus den abgelegten Parametern durch die elektronische Recheneinrichtung (18); (S3)
- Zuordnen des jeweiligen Parameters in Abhängigkeit des von ihm charakterisierten Zustands zu einem der Teildatensätze (20); (S4) und
- Bereitstellen des die Teildatensätze (20) umfassen Datensatzes (22), wobei dem jeweiligen Teildantesatz ein Abfragewert zugeordnet wird. (S5)

2. Verfahren nach Anspruch 1, wobei der Datensatz (22) und/oder wenigstens einer der Teildatensätze (20) als Graph (24) erzeugt wird, indem beim Ablegen eine Einordnung des jeweiligen Parameters als ein Knoten (26) oder eine Kante (28) des Graphen (24) erfolgt.

3. Verfahren nach Anspruch 1 oder 2, wobei der wenigstens eine erfasste Zustand eine Bewegung des Werkers (10) und/oder eine Einstellung der Fertigungseinrichtung (12) beschreibt.

4. Verfahren nach einem der vorhergehenden Ansprüche, wobei zusätzlich wenigstens ein Umgebungsparameter erfasst wird, welcher insbesondere eine Temperatur, einen Luftdruck, eine Feuchtigkeit und/oder eine Stimme des Werkers (10) umfasst.

5. Verfahren nach einem der vorhergehenden Ansprüche, wobei durch die Erfassungseinrichtung (14) der Zustand des Werkers (10) mittels einer VR-Brille, einer Datenbrille, einer Verfolgungseinrichtung, einer Bewegungserfassungseinrichtung, eines Kraftmessungssensors und/oder Stimmenaufzeichnungseinrichtung erfasst.

6. Verfahren nach einem der vorhergehenden Ansprüche, wobei das Bereitstellen des die Teildatensätze (20) umfassen Datensatzes (22) an ein Kommunikationsnetz und/oder an eine von der elektronischen Recheneinrichtung (18) unterschiedliche, weitere elektronischen Recheneinrichtung (32) erfolgt.

7. Verfahren nach einem der vorhergehenden Ansprüche, wobei anhand des Abfragewerts eine Zugangsbeschränkung für den jeweiligen Teildatensatz (20) erstellt wird.

8. Verfahren nach einem der vorhergehenden Ansprüche, wobei wenigstens einer der Teildatensätze (20) Parameter umfasst, welche eine Identifikation des Werkers (10) ermöglichen.

9. Verfahren nach einem der vorhergehenden Ansprüche, wobei wenigstens einer der Verfahrensschritte mittels Methoden des maschinellen Lernens durchgeführt wird.

10. Verfahren nach einem der vorhergehenden Ansprüche, wobei zum Steuern eines weiteren Produktionsprozesses aufgrund des Datensatzes (22) ein Steuerungsagent (34) bereitgestellt wird.

11. Computerprogramm, welches direkt in einen Speicher einer elektronischen Recheneinrichtung (18, 32) ladbar ist, mit Programmmitteln, um die Schritte des Verfahrens nach einem der Ansprüche 1 bis 10 auszuführen, wenn das Programm in der elektronischen Recheneinrichtung (18, 32) ausgeführt wird.

12. Elektronisch lesbarer Datenträger mit darauf gespeicherten elektronisch lesbaren Steuerinformationen, welche zumindest ein Computerprogramm nach Anspruch 11 umfassen und derart ausgestaltet sind, dass sie bei Verwendung des Datenträgers in einer elektronischen Recheneinrichtung (18, 32) ein Verfahren nach einem der Ansprüche 1 bis 10 durchführen.
